# EUROPEAN PATENT SPECIFICATION

(11) **EP 3 122 087 B1**
(45) Date of publication and mention of the grant of the patent: **09.01.2019**
(21) Application number: 16163081.9
(22) Date of filing: 31.07.2009
(51) Int. Cl.: H04B 7/26, H04W 52/32, H04W 52/16

(54) **METHOD AND DEVICE FOR TRANSMITTING DOWNLINK MULTIFRAME**
VERFAHREN UND VORRICHTUNG ZUR ÜBERTRAGUNG VON DOWNLINK-MULTIFRAME
PROCÉDÉ ET DISPOSITIF POUR UNE TRANSMISSION MULTIFRAME EN LIAISON DESCENDANTE

(30) Priority: 05.08.2008 CN 200810129668
(43) Date of publication of application: 25.01.2017
(62) Divisional of application: 09804480.3
(73) Proprietor: Huawei Technologies Co., Ltd., Longgang District Shenzhen, Guangdong 518129 (CN)
(72) Inventor: Dong, Pengpeng, Shenzhen Guangdong (CN); Mei, Jingjin, Shenzhen Guangdong (CN); Xiao, Jiehua, Shenzhen Guangdong (CN)
(74) Representative: Kreuz, Georg Maria

(56) References cited:
- EP-A2- 1 318 634
- WO-A1-02/13416
- WO-A1-2005/053214
- US-A1- 2006 126 578
- NOKIA SIEMENS NETWORKS ET AL: "Voice Capacity Evolution", 3GPP DRAFT; GP-071792_VOICE_CAPACITY_EVOLUTION_BY_OSC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Vancouver; 20071109, 9 November 2007 (2007-11-09), XP050019133,
- HUAWEI TECHNOLOGIES CO: "New Strategy on SACCH for Dowlink MUROS", INTERNET CITATION, 25 August 2008 (2008-08-25), pages 1-5, XP002555608, Retrieved from the Internet: URL:http://www.3gpp.org/ftp/tsg_geran/TSG_ GERAN/GERAN_39_Florence/Docs/ [retrieved on 2009-11-17]
- "3rd Generation Partnership Project; Technical Specification Group GERAN; Circuit Switched Voice Capacity Evolution for GSM/EDGE Radio Access Network (GERAN) (Release 8)", 3GPP STANDARD; 3GPP TR 45.914, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.1.0, 1 May 2009 (2009-05-01), pages 1-256, XP050379320,

## Description

### FIELD OF THE INVENTION

The present invention relates to the field of mobile communication technology, and in particular, to a method and a device for transmitting downlink multiframes.

### BACKGROUND OF THE INVENTION

With the increasing number of subscribers, the voice capacity in the mobile communications system, especially for areas or countries with a large population, keeps increasing. Meanwhile, with development of technologies, competition has been intensifying, and the charging fees of voice services are reducing. In this case, to reduce the cost, carriers need to utilize the hardware and frequency spectrum resources more effectively.

For tradition voice services, a timeslot is allocated to only one subscriber. To increase the voice capacity, that is, to enable the same resource to carry voice of more channels, Multi-User Reuse One Slot (MUROS) is adopted. That is, multiple subscribers reuse one timeslot and Absolute Radio Frequency Channel Number (ARFCN). In this way, the capacity on a fixed carrier frequency and frequency spectrum can increase significantly.

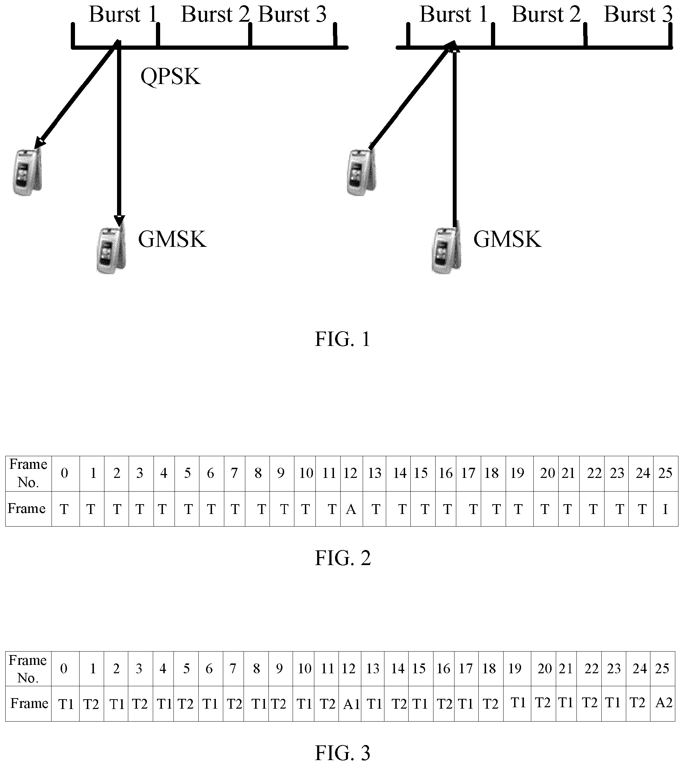

FIG. 1 shows the MUROS solution schematic diagram. The MUROS solution can provide two sub-channels that allow two Mobile Stations (MSs) to work on the same wireless resource. Each MS uses a sub-channel. The two sub-channels are differentiated by the orthogonal or orthogonal-similar training sequences. For the traditional circuit switching (CS) voice services, each burst is used by an MS, and the Gaussian Minimum Shift Keying (GMSK) modulation mode is adopted for both downlink and uplink transmission. In the downlink direction, the base station sends two-channel GMSK signals, which generate quasi-Quadrature Phase-Shift Keying (QPSK) signals. The receiving end removes the irrelevant signal as interference signal by using the orthogonal training sequence and enhanced interference elimination technology, and obtains its own signal. In the uplink direction, the two MSs still transmits packets through the same timeslot using the GMSK modulation mode. The base station demodulates the two-channel multiplex signals using the Successive Interface Cancellation (SIC) or Joint Detection (JD) method and differentiates the two subscribers with different Training Sequence Codes (TSCs).

Each Time Division Multiple Access (TDMA) frame includes eight basic timeslots. Each timeslot is a basic physical channel and includes 156.25 code cells. The 156.25 code cells representing 156.25 bits for the ordinary burst sequence. Multiple TDMA frames constitute a multiframe. When different logical channels are mapped onto a physical channel, the multiframes are required. The duration of a multiframe comprising 26 frames is 120 ms; this multiframe is used for the service channel and Slow Associated Control Channel (SACCH). An SACCH refers to a slow control channel associated with the Traffic Channel (TCH) and is used to transmit slow signaling, such as time advance and power control during a conversation. Among the 26 frames, 24 burst sequences are used for services, and 2 burst sequences are used for signaling.

FIG. 2 shows a structure of a 26-frame multiframe when one subscriber uses a full-rate channel. In the figure, the 24 frames (frames 0 to 11 and 13 to 24) are TCH frames, identified by T; frame 12 is an SACCH frame, identified by A; frame 25 is an idle frame, identified by I.

FIG. 3 shows a structure of a 26-frame multiframe when each of two subscribers uses a half-rate channel. In the figure, the 24 frames (frames 0 to 11 and 13 to 24) are TCH frames, and frames 12 and 25 are SACCH frames. The two SACCH frames are used by the two subscribers respectively. In FIG. 3, T1 is the TCH frame of subscriber 1; T2 is the TCH frame of subscriber 2; A1 is the SACCH frame of subscriber 1; A2 is the SACCH frame of subscriber 2.

EP1318634A2 discloses a communication system comprising a first station capable of communication with a second station over a wireless channel, data being carried over the wireless channel in superframes, each superframe comprising a plurality of frames and each frame comprising a plurality of timeslots, the system having a mode of operation in which a data channel for circuit switched communications is defined by the allocation to that channel of corresponding time slots of some of the frames of each superframe, and a data channel for packet switched communications is defined by the allocation to that channel of corresponding time slots of other of the frame of each superframe. EP1318634A2 also discloses a circuit switched network wherein two or four mobile stations are time division multiplexed and the two or four mobile stations use half or quarter rate encoding respectively. In the former case each half rate channel is provided from its own respective multiframe. In the latter, the two consecutive downlink multiframes are needed for complete transmission.

WO02/13416A1 relates to a method for the transmission of data between a number of user stations (MS1, MS2), using a common timeslot of a series of frames and a base station (BS1). The base station (BS1) transmits user data destined for a first of the user stations (MS1) and control information for a second user station (MS2) in a given timeslot, whereby the control information is encoded with a stronger error protection than the user data. A radio signal emitted in the given timeslot directed at the first user station (MS1) is superimposed with a second radio signal, the transmission power of which is sufficient to reach in the direction of the second user station (MS2), in order to permit a precise reception of the control information. The second signal can either be multiplexed or not. The method of transmission is directed towards networks in which data is packet-switched.

The inventor finds the current technology has the following problem during implementation: When the frames of two subscribers multiplex in a half-rate channel, it indicates that the frames of four subscribers are multiplexed in a full-rate channel. The 26-frame multiframe can include only two SACCH frames. This cannot meet the requirements for the SACCH frames of four subscribers. Therefore, the current solution for downlink multiframe transmission cannot meet the requirements for downlink SACCH frames transmission.

### SUMMARY OF THE INVENTION

A method, a device, and a system for transmitting downlink multiframe are provided in the present invention to solve the problem wherein the current solution cannot meet the requirements for SACCH frames transmission when MUROS multiplexing is performed in the half-rate channel. The invention is defined by the independent claims. Further embodiments are in the dependent claims.

The embodiments and/or examples of the following description which are not covered by the appended claims are considered as not being part of the present invention.

Through multiplexing transmission of the SACCH frame of a subscriber and one or more TCH frames of other subscribers, the SACCH frames of the subscribers are staggered during transmission. This ensures normal transmission of the SACCH signaling of all subscribers and reduces the effect on the voice quality.

### BRIEF DESCRIPTION OF THE DRAWINGS

FIG. 1 shows a schematic diagram of the MUROS solution of the current technology;
FIG. 2 shows a structure of the 26-frame multiframe when a single subscriber uses a full-rate channel in the current technology;
FIG. 3 shows a structure of the 26-frame multiframe when each of two subscribers uses a half-rate channel in the current technology;
FIG. 4 shows a flowchart of a downlink multiframe transmission provided in an embodiment of the present invention;
FIG. 5 shows a schematic diagram of a downlink multiframe transmission method provided in the first embodiment of the present invention;
FIG. 6 shows a schematic diagram of a downlink multiframe transmission method provided in the second embodiment of the present invention;
FIG. 7 shows a structure of a device for controlling transmission of the downlink multiframe transmission provided in an embodiment of the present invention; and
FIG. 8 shows a structure of a UE for receiving the downlink multiframe provided in an embodiment of the present invention.

### DETAILED DESCRIPTION OF THE EMBODIMENTS

The present invention provides a new solution for transmitting the 26-frame multiframe. This solution solves the problem wherein when the frames of multiple (for example, two) subscribers multiplex a half-rate channel (that is, the frames of four subscribers multiplex a full-rate channel), the downlink SACCH frames among the 26 frames are insufficient for the four subscribers.

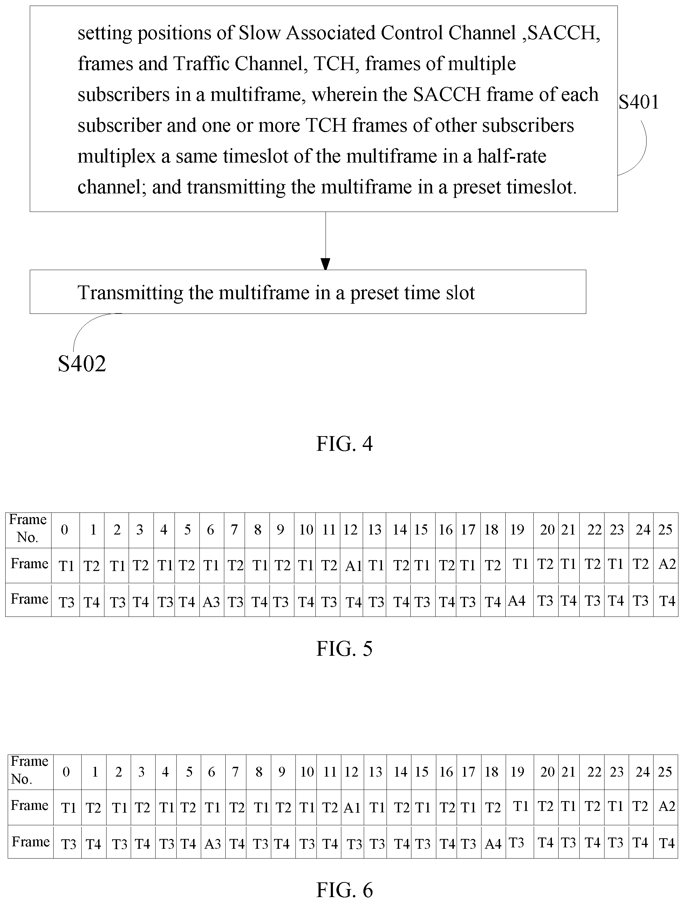

FIG. 4 shows a flowchart of the method for transmitting the downlink multiframe in an embodiment of the present invention. The transmission flow includes:
S401: The positions of SACCH frames and TCH frames of multiple subscribers in the multiframe are set. The SACCH frame of each subscriber and one or more TCH frames of other subscribers multiplex a same timeslot of the multiframe in a half-rate channel.
S402: The multiframe is transmitted in the preset timeslot.

Therefore, SACCH frames of a subscriber and other subscribers with which the subscriber shares same timeslot are staggered during transmission. This not only ensures normal transmission of the SACCH signaling of each subscriber but also reduces the effect on the voice quality.

In addition, when the SACCH frame and the TCH frame are transmitted in same timeslot, different transmit powers may be used to transmit the SACCH frame and TCH frame respectively.

Preferably, the transmit power for the SACCH frame is greater than the transmit power for the TCH frame with which the SACCH frames share a same timeslot of the multiframe in a half-rate channel. Transmitting the SACCH frame in a greater power ensures the signaling of the SACCH frame can be received correctly.

The following provides details about embodiments of the present invention based on the structure of the multiframe.

### Embodiment 1

It is assumed that the frames of subscribers MS1 and MS3 share a half-rate channel, and the frames of subscribers MS2 an MS4 share the other half-rate channel. That is, the frames of four subscribers share a full-rate channel.

FIG. 5 shows a schematic diagram of the first embodiment. In the figure, T1 is the TCH frame of MS1; T2 is the TCH frame of MS2; T3 is the TCH frame of MS3; T4 is the TCH frame of MS4. A1 is the SACCH frame of MS1; A2 is the SACCH frame of MS2; A3 is the SACCH frame of MS3; A4 is the SACCH frame of MS4.

The SACCH frame of MS1 is still transmitted in frame 12, and the SACCH frame of MS3 is transmitted in frame 6. In this case, the SACCH frame of MS1 and the TCH frame of MS4 are transmitted by multiplexing frame 12. In addition, the powers for the SACCH frame of MS1 and the TCH frame of MS4 may be set to be different; preferably, the SACCH frame of MS1 has a greater transmit power to ensure that the signaling of the SACCH frame can be received correctly. Similarly, the SACCH frame of MS3 and the TCH frame of MS1 are transmitted by multiplexing frame 6. In addition, the powers for the SACCH frame of MS3 and the TCH frame of MS1 may be set to be different; preferably, the SACCH frame of MS1 has a greater transmit power to ensure that the signaling of the SACCH frame can be received correctly.

The SACCH frame of MS2 is still transmitted in frame 25, and the SACCH frame of MS4 is transmitted in frame 19.

Note that it is only an example in FIG 5 that A3 is transmitted in frame 6, A4 in frame 19 to ensure even transmission of SACCH frames. The SACCH frames are transmitted in other frame numbers as long as the SACCH frames of all subscribers are transmitted in different frame numbers. When an SACCH frame and a TCH frame are transmitted in same timeslot, the SACCH frame has a greater transmit power to ensure transmitting the SACCH frame correctly, which affects the TCH frame and those adjacent to the TCH frame. When the SACCH frames are staggered during transmission, the SACCH frames can be positioned evenly to separate TCH frames that are affected, which reduces the effect on the voice quality.

The present invention provides a new solution for transmitting the 26-frame multiframe. This solution implements staggered transmission of SACCH frames of multiple (for example, two) subscribers sharing a half-rate channel, and solves the problem wherein the downlink SACCH frames among the 26 frames are insufficient for the four subscribers whose frames share two half-rate channels. It ensures correct transmission of SACCH frames and reduces the effect on the voice quality.

### Embodiment 2

It is assumed that the frames of subscribers MS1 and MS3 share a half-rate channel, and the frames of subscribers MS2 an MS4 share the other half-rate channel. That is, the frames of four subscribers share a full-rate channel.

FIG. 6 shows a schematic diagram of the second embodiment. In the figure, T1 is the TCH frame of MS1; T2 is the TCH frame of MS2; T3 is the TCH frame of MS3; T4 is the TCH frame of MS4. A1 is the SACCH frame of MS1; A2 is the SACCH frame of MS2; A3 is the SACCH frame of MS3; A4 is the SACCH frame of MS4.

The SACCH frame of MS1 is still transmitted in frame 12, and the SACCH frame of MS3 is transmitted in frame 6. Similarly, the SACCH frame of MS1 and the TCH frame of MS3 are transmitted by multiplexing frame 12. Preferably, the powers for the SACCH frame of MS1 and the TCH frame of MS3 are set to be different; and, the SACCH frame of MS1 has a greater transmit power to ensure that the signaling of the SACCH frame can be received correctly. Similarly, the SACCH frame of MS3 and the TCH frame of MS1 are transmitted by multiplexing frame 6. Preferably, the powers for the SACCH frame of MS3 and the TCH frame of MS1 are set to be different; and, the SACCH frame of MS3 has a greater transmit power to ensure that the signaling of the SACCH frame can be received correctly.

The SACCH frame of MS2 is transmitted in frame 25, and the SACCH frame of MS4 is transmitted in frame 18.

The positions of the SACCH frames and TCH frames of all subscribers in the second embodiment are different from those in the first embodiment.
(1) The TCH frame of MS1 always shares a same timeslot with the TCH frame of MS3, and the TCH frame of MS2 always shares a same timeslot with the TCH frame of MS4. That is, the TCH frame of a subscriber always shares a same timeslot with another identical subscriber in the multiframe.
   For details, see FIG. 6. Compared with FIG. 5, the positions of the TCH frames of MS3 and MS4 are adjusted in FIG. 6, which ensures that the TCH frame of MS1 always multiplex a same timeslot with the TCH frame of MS3, and the TCH frame of MS2 always multiplex a same timeslot with the TCH frame of MS4. This improves the stability of multiplexing subscribers; and/or,
(2) The SACCH frames of all subscribers multiplex a same timeslot with the TCH frames of all subscribers. This balances for each subscriber the interference of the SACCH frames on the TCH frames.

When the SACCH frame of a subscriber multiplex a same timeslot along with the TCH frames of other subscribers, the transmit power of the SACCH frame is greater than that of the TCH frame, which causes interference on the TCH frame. To solve the problem, the positions of the TCH frames and SACCH frames of MS3 and MS4 are adjusted in the second embodiment so that the four SACCH frames multiplex a same timeslot with the four TCH frames of four subscribers respectively.

In the first embodiment, A1 multiplex the same timeslot with T4, A2 with T4, A3 with T1, and A4 with T1. Therefore, the SACCH frames have interference only on T1 and T4 (TCH frames of MS1 and MS4). In the second embodiment, A1 multiplex the same timeslot with T3, A2 with T4, A3 with T1, and A4 with T2. Therefore, the four SACCH frames have interference respectively on the TCH frames of four subscribers. In this case, compared with the first embodiment, the interference on TCH frames in the second embodiment is more balanced, which further reduces the effect on the voice quality.

The technical solution of the present invention is applicable to the scenario in which the frames of multiple subscribers share a half-rate channel. The preceding embodiments take the scenario in which the frames of two subscribers share a half-rate channel or the frames of four subscribers share a full-rate channel as an example to describe the technical solution of the present invention. The solution for the scenario in which the frames of multiple subscribers in a half-rate channel is similar to the preceding scenario, and therefore is not described here. When multiple subscribers multiplex the same timeslot, namely, the SACCH frames of different subscribers are transmitted by multiplexing different timeslots, the SACCH frames of different subscribers are staggered during transmission, which ensures transmission of SACCH frames and reduces the effect on the voice quality.

A device for controlling transmission of the downlink multiframe is provided in an embodiment of the present invention. Adapted to implement MUROS of half-rate channels, the device can be a base station device or a functional entity within the base station device. The device can be implemented by software, hardware, or combination of software and hardware.

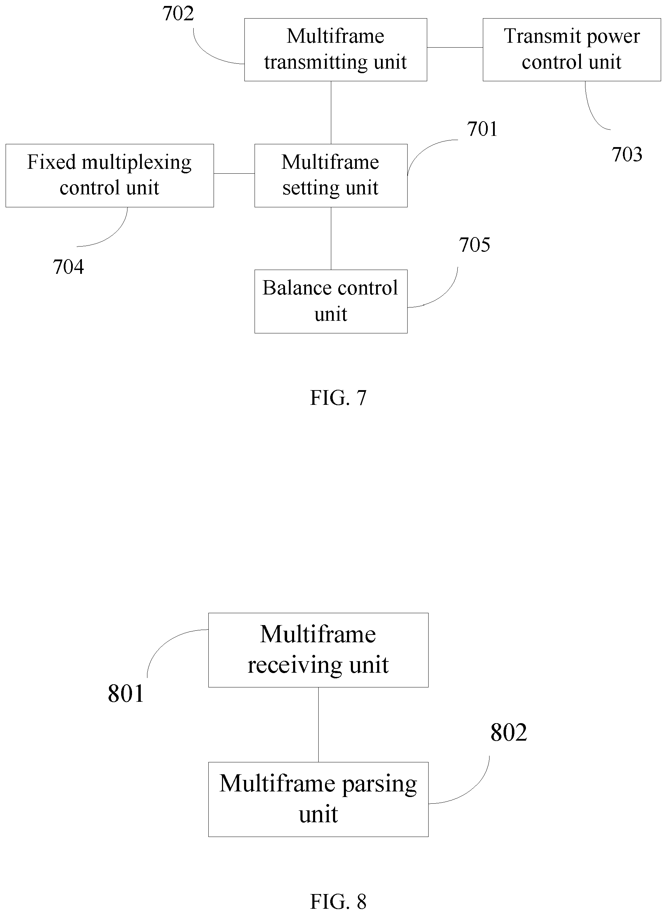

FIG. 7 shows a structure of the inside of the device for controlling the downlink multiframe. The device includes:
a multiframe setting unit701, adapted to set positions of Slow Associated Control Channel ,SACCH, frames and Traffic Channel, TCH, frames of multiple subscribers in a multiframe, wherein the SACCH frame of each subscriber and one or more TCH frames of other subscribers multiplex a same timeslot of the multiframe in a half-rate channel; and
a multiframe transmitting unit 702, adapted to transmit the multiframe in a preset timeslot.
Preferably, the device further includes:
   a transmit power control unit 703, adapted to control the transmit powers so that the transmit power of the SACCH frame is greater than the transmit power of the TCH frame to which is transmitted in a same timeslot with the SACCH frame

Alternatively, the transmit power control unit 703 is adapted to control the transmit powers so that the transmit powers of the SACCH frame and of the TCH frame are different during transmission when the SACCH frame and the TCH frame are transmitted in a same timeslot.

Further, in the example in which the multiple subscribers comprise two subscribers, the device may further include:
a fixed multiplexing control unit 704, adapted to adjust the positions of the SACCH frames and TCH frames of each subscriber, so that TCH frame of the first subscriber always shares a same timeslot with TCH frame of the second subscriber.

Optionally, the device may further include:
a balance control unit 705, adapted to adjust the positions of the SACCH frames and TCH frames of each subscriber so that the SACCH frames of all subscribers multiplex same timeslot with TCH frames of all subscribers..

Note that the implementation of controlling the downlink multiframe is similar to the implementation described in the preceding embodiments, and therefore is not described here.

A device for receiving the downlink multiframe is provided in an embodiment of the present invention. The device can be a UE or a functional entity within a UE. The device can be implemented by software, hardware, or combination of software and hardware.

FIG. 8 shows a structure of the inside of the device for receiving the downlink multiframe. The device includes:
a multiframe receiving unit 801, adapted to receive the multiframe in the preset timeslot; and
a multiframe parsing unit 802, adapted to parse the multiframe to obtain the SACCH frame and TCH frame of the UE, wherein the SACCH frame of the UE shares a same timeslot of half-rate channel with one or more TCH frames of other UEs.

By transmitting the SACCH frame of a subscriber and one or more TCH frames of other subscribers in same timeslot, the SACCH frames of all subscribers are staggered during transmission. This ensures normal transmission of the SACCH signaling of all subscribers and reduces the effect on the voice quality.

Preferably, when the SACCH frame of a subscriber shares a same timeslot with one or more TCH frames of other subscribers, the powers of the two frames must be different; that is, the SACCH frame has a greater transmit power than the TCH frame to ensure that the signaling of the SACCH frame can be received correctly.

In addition, The TCH frame of the first subscriber always shares a same timeslot with TCH frame of the second subscriber. This ensures that the TCH frame of a subscriber always shares a same timeslot with another identical subscriber in the multiframe and which improves the stability of the multiplexing subscribers.

All SACCH frames multiplex a same timeslot with the TCH frames of all subscribers. This balances for each subscriber the interference of the SACCH frames on the TCH frames, and reduces the effect on the voice quality.

A system for transmitting the downlink multiframe is provided in an embodiment of the present invention. The system includes:
a device for controlling transmission of the downlink multiframe, adapted to set positions of Slow Associated Control Channel ,SACCH, frames and Traffic Channel, TCH, frames of multiple subscribers in a multiframe, wherein the SACCH frame of each subscriber and one or more TCH frames of other subscribers multiplex a same timeslot of the multiframe in a half-rate channel; and transmit the multiframe in a preset timeslot; and
a User Equipment (UE) for receiving the downlink multiframe, adapted to receive the downlink multiframe in the preset timeslot; and parse the downlink multiframe to obtain SACCH frame and TCH frame of the UE.

It is understandable to those skilled in the art that all or part of the steps in the foregoing embodiments may be performed through hardware instructed by a program. The program may be stored in a computer-readable storage medium such as ROM/RAM, magnetic disk, and compact disk.

Details above are only a preferable method of the present invention.

## Claims

1. A method performed by a device for transmitting a downlink multiframe when frames of two user equipments multiplex a half rate channel, comprising:
setting (S401) positions of Slow Associated Control Channel, SACCH, frames and Traffic Channel, TCH, frames of the two user equipments in the multiframe, wherein the SACCH frame of each user equipment and one TCH frame of the other user equipment multiplex a same timeslot in which the multiframe is transmitted in a half-rate channel; and
transmitting (S402) the multiframe in a preset timeslot.

2. The method according to claim 1, wherein:
the SACCH frame and the TCH frame which is multiplexed with the SACCH frame in the same timeslot are transmitted by using different powers.

3. The method according to claim 1, wherein a transmit power of the SACCH frame is greater than a transmit power of the TCH frame which is multiplexed with the SACCH frame in the same timeslot.

4. The method according to any one of claims 1, 2, and 3, wherein
the SACCH frame of one user equipment and the TCH frame of the other user equipment are multiplexed in one of the following frames: frame 6, frame 12, frame 18, and frame 25.

5. A device for controlling transmission of a downlink multiframe when frames of two user equipments multiplex a half rate channel, comprising:
a multiframe setting unit (701), configured to set positions of Slow Associated Control Channel, SACCH, frames and Traffic Channel, TCH, frames of the two user equipments in the multiframe, wherein the SACCH frame of each user equipment and one TCH frame of the other user equipment multiplex a same timeslot in which the multiframe is transmitted in a half-rate channel; and
a multiframe transmitting unit (702), configured to transmit the multiframe in a preset timeslot.

6. The device according to claim 5, further comprising:
a transmit power control unit (703), configured to control transmit powers so that transmit powers of the SACCH frame and of the TCH frame are different when the SACCH frame and the TCH frame are transmitted in a same timeslot.

7. The device according to claim 5, further comprising:
a transmit power control unit (703), configured to control transmit powers so that transmit power of the SACCH frame is greater than transmit power of the TCH frame which is transmitted in a same timeslot with the SACCH frame.

8. The device according to any one of claims 5, 6, and 7, wherein the SACCH frame of one user equipment and the TCH frame of the other user equipment are multiplexed in one of the following frames: frame 6, frame 12, frame 18, and frame 25.

9. The device according to any one of claims 5, 6, 7 and 8, wherein the device is a base station device or a functional entity within a base station device.

10. A user equipment, UE, for receiving a downlink multiframe when frames of two UEs multiplex a half rate channel, wherein the UE is one of the two UEs, and the UE comprises:
a multiframe receiving unit (801), configured to receive the downlink multiframe; and
a multiframe parsing unit (802), configured to parse the downlink multiframe to obtain a Slow Associated Control Channel, SACCH, frame and a Traffic Channel ,TCH, frame of the UE, wherein the SACCH frame is multiplexed in a same timeslot of a half-rate channel with one TCH frame of the other UE which is in the two UEs.

11. The UE according to claim 10, wherein the SACCH frame of the UE and the TCH frame of the other UE is multiplexed in one of the following frames: frame 6, frame 12, frame 18, and frame 25.

12. A program which when run instructs hardware to perform the method according to any of claims 1-4.

## Patentansprüche

1. Verfahren, das durch eine Vorrichtung zur Übertragung eines Downlink-Multiframes durchgeführt wird, wenn Frames von zwei Endgeräten einen Halbratenkanal multiplexieren, welches Folgendes umfasst:
Einstellen (S401) von Positionen von SACCH, Slow Associated Control Channel, - Frames und TCH, Traffic Channel, -Frames der beiden Endgeräte in dem Multiframe, wobei der SACCH-Frame jedes Endgerätes und ein TCH-Frame des anderen Endgerätes einen gleichen Zeitschlitz, in welchem der Multiframe übertragen wird, in einem Halbratenkanal multiplexieren; und
Übertragen (S402) des Multiframes in einem voreingestellten Zeitschlitz.

2. Verfahren nach Anspruch 1, wobei:
der SACCH-Frame und der TCH-Frame, welcher mit dem SACCH-Frame in dem gleichen Zeitschlitz multiplexiert wird, durch Verwendung unterschiedlicher Leistungen übertragen werden.

3. Verfahren nach Anspruch 1, wobei eine Sendeleistung des SACCH-Frames höher ist als eine Sendeleistung des TCH-Frames, welcher mit dem SACCH-Frame in dem gleichen Zeitschlitz multiplexiert wird.

4. Verfahren nach einem der Ansprüche 1, 2 und 3, wobei
der SACCH-Frame eines Endgerätes und der TCH-Frame des anderen Endgerätes in einem der folgenden Frames multiplexiert werden: Frame 6, Frame 12, Frame 18 und
Frame 25.

5. Vorrichtung zur Steuerung der Übertragung eines Downlink-Multiframes, wenn Frames von zwei Endgeräten einen Halbratenkanal multiplexieren, welche Folgendes umfasst:
eine Multiframe-Einstelleinheit (701), die konfiguriert ist zum Einstellen von Positionen von SACCH, Slow Associated Control Channel, -Frames und TCH,
Traffic Channel, -Frames der beiden Endgeräte in dem Multiframe, wobei der SACCH-Frame jedes Endgerätes und ein TCH-Frame des anderen Endgerätes einen gleichen Zeitschlitz, in welchem der Multiframe übertragen wird, in einem Halbratenkanal multiplexieren; und
eine Multiframe-Übertragungseinheit (702), die konfiguriert ist zum Übertragen des Multiframes in einem voreingestellten Zeitschlitz.

6. Vorrichtung nach Anspruch 5, welche ferner Folgendes umfasst:
eine Sendeleistungssteuereinheit (703), die konfiguriert ist zum Steuern von Sendeleistungen, derart, dass sich Sendeleistungen des SACCH-Frames und des TCH-Frames unterscheiden, wenn der SACCH-Frame und der TCH-Frame in einem gleichen Zeitschlitz übertragen werden.

7. Vorrichtung nach Anspruch 5, welche ferner Folgendes umfasst:
eine Sendeleistungssteuereinheit (703), die konfiguriert ist zum Steuern von Sendeleistungen, derart, dass eine Sendeleistung des SACCH-Frames höher ist als eine Sendeleistung des TCH-Frames, welcher in einem gleichen Zeitschlitz mit dem SACCH-Frame übertragen wird.

8. Vorrichtung nach einem der Ansprüche 5, 6 und 7, wobei der SACCH-Frame eines Endgerätes und der TCH-Frame des anderen Endgerätes in einem der folgenden Frames multiplexiert werden: Frame 6, Frame 12, Frame 18 und Frame 25.

9. Vorrichtung nach einem der Ansprüche 5, 6, 7 und 8, wobei die Vorrichtung eine Basisstationsvorrichtung oder eine Funktionseinheit innerhalb einer Basisstationsvorrichtung ist.

10. Endgerät, UE - *User Equipment,* zum Empfangen eines Downlink-Multiframes, wenn Frames von zwei UEs einen Halbratenkanal multiplexieren, wobei das UE eines der beiden UEs ist und das UE Folgendes umfasst:
eine Multiframe-Empfangseinheit (801), die konfiguriert ist zum Empfangen des Downlink-Multiframes; und
eine Multiframe-Parsing-Einheit (802), die konfiguriert ist zum Parsen des Downlink-Multiframes zum Erhalten eines SACCH, Slow Associated Control Channel, -Frames und eines TCH, Traffic Channel, -Frames des UE, wobei der SACCH-Frame in einem gleichen Zeitschlitz eines Halbratenkanals mit einem TCH-Frame des anderen UE multiplexiert wird, welcher sich in den beiden UEs befindet.

11. UE nach Anspruch 10, wobei der SACCH-Frame des UE und der TCH-Frame des anderen UE in einem der folgenden Frames multiplexiert werden: Frame 6, Frame 12, Frame 18 und Frame 25.

12. Programm, welches, wenn es ausgeführt wird, Hardware zum Durchführen des Verfahrens nach einem der Ansprüche 1-4 anweist.

## Revendications

1. Procédé exécuté par un dispositif pour transmettre une multitrame de liaison descendante lorsque des trames de deux équipements utilisateur multiplexent un canal à demi-débit, comprenant :
la définition (S401) des positions des trames de canal de signalisation associé lent, SACCH, et des trames de canal de trafic, TCH, des deux équipements utilisateur dans la multitrame, la trame SACCH de chaque équipement utilisateur et une trame TCH de l'autre équipement utilisateur multiplexant un même créneau temporel dans lequel la multitrame est transmise dans un canal à demi-débit ; et
la transmission (S402) de la multitrame dans un créneau temporaire prédéfini.

2. Procédé selon la revendication 1, dans lequel :
la trame SACCH et la trame TCH qui est multiplexée avec la trame SACCH dans le même créneau temporel sont transmises en utilisant différentes puissances.

3. Procédé selon la revendication 1, dans lequel une puissance de transmission de la trame SACCH est plus grande qu'une puissance de transmission de la trame TCH qui est multiplexée avec la trame SACCH dans le même créneau temporel.

4. Procédé selon l'une quelconque des revendications 1, 2 et 3, dans lequel la trame SACCH d'un équipement utilisateur et la trame TCH de l'autre équipement utilisateur sont multiplexées dans une des trames suivantes : trame 6, trame 12, trame 18 et trame 25.

5. Dispositif pour commander la transmission d'une multitrame de liaison descendante lorsque les trames de deux équipements utilisateur multiplexent un canal à demi-débit, comprenant :
une unité de définition de multitrame (701), configurée de façon à définir des positions de trames de canal de signalisation associé lent, SACCH, et de trames de canal de trafic, TCH, des deux équipements utilisateur dans la multitrame, la trame SACCH de chaque équipement utilisateur et une trame TCH de l'autre équipement utilisateur multiplexant un même créneau temporel dans lequel la multitrame est transmise dans un canal à demi-débit ; et
une unité de transmission de multitrame (702), configurée de façon à transmettre la multitrame dans un créneau temporel prédéfini.

6. Dispositif selon la revendication 5, comprenant en outre :
une unité de commande de puissances de transmission (703), configurée de façon à commander les puissances de transmission de manière à ce que les puissances de transmission de la trame SACCH et de la trame TCH soient différentes lorsque la trame SACCH et la trame TCH sont transmises dans un même créneau temporel.

7. Dispositif selon la revendication 5, comprenant en outre :
une unité de commande de puissances de transmission (703), configurée de façon à commander les puissances de transmission de manière à ce que la puissance de transmission de la trame SACCH soit plus grande que la puissance de transmission de la trame TCH qui est transmise dans un même créneau temporel que la trame SACCH.

8. Dispositif selon l'une quelconque des revendications 5, 6 et 7, dans lequel la trame SACCH d'un équipement utilisateur et la trame TCH de l'autre équipement utilisateur sont multiplexées dans une des trames suivantes : trame 6, trame 12, trame 18 et trame 25.

9. Dispositif selon l'une quelconque des revendications 5, 6, 7 et 8, ce dispositif étant un dispositif de station de base ou une entité fonctionnelle à l'intérieur d'une station de base.

10. Équipement utilisateur, UE, pour recevoir une multitrame de liaison descendante lorsque des trames de deux UE multiplexent un canal à demi-débit, cet UE étant un des deux UE, et cet UE comprenant :
une unité de réception de multitrame (801), configurée de façon à recevoir la multitrame de liaison descendante ; et
une unité d'analyse syntaxique de multitrame (802), configurée de façon à analyser syntaxiquement la multitrame de liaison descendante afin d'obtenir une trame de canal de signalisation associé lent, SACCH, et une trame de canal de trafic, TCH, de l'UE, la trame SACCH étant multiplexée dans un même créneau temporel d'un canal à demi-débit avec une trame TCH de l'autre UE qui est dans les deux UE.

11. UE selon la revendication 10, dans lequel la trame SACCH de l'UE et la trame TCH de l'autre UE sont multiplexées dans une des trames suivantes : trame 6, trame 12, trame 18 et trame 25.

12. Programme qui, lorsqu'il est exécuté, demande au matériel d'exécuter le procédé selon l'une quelconque des revendications 1 à 4.
